# EUROPEAN PATENT APPLICATION

(11) **EP 1 175 853 A1**
(43) Date of publication of application: **30.01.2002**
(21) Application number: 01115794.8
(22) Date of filing: 11.07.2001
(51) Int. Cl.: A47B 77/08

(54) **Integrated laundry center**

(30) Priority: 25.07.2000 US 220655
(71) Applicant: WHIRLPOOL CORPORATION, Benton Harbor Michigan 49022 (US)
(72) Inventor: Sunshine, Richard A., Benton Harbor, Mi 49022 (US); Tomasi, Donald Mark, Benton Harbor, Mi 49022 (US); Underly, Kristina K., Benton Harbor, Mi 49022 (US); Baldini, Massimo, Benton Harbor, Mi 49022 (US); Conrad, Daniel C., Benton Harbor, Mi 49022 (US)
(74) Representative: Guerci, Alessandro

(57) **Abstract**

An integrated laundry center has an integrated cabinet assembly defining a plurality of discrete spaces. Each space can provide a separate module for performing a particular fabric care function. A washing machine is at least partly housed within a portion of the cabinet assembly defining a washer module. A clothes dryer is at least partly housed within a portion of the cabinet assembly defining a dryer module. A plurality of exterior decorative fascia panels are carried by the cabinet assembly and can be selected to coordinate with a decor of an individual's home. The integrated laundry center can also include any number of additional and optional modules providing virtually any desired fabric care function and equipment. The integrated laundry center can also incorporate an optional control system for controlling virtually any function of each of the integrated laundry center modules such as the washing machine functions and the clothes dryer functions. The integrated laundry center can be particularly designed to include only selected modules and to have the selected modules arranged and oriented as desired.

## Description

### BACKGROUND OF THE INVENTION

### 1. Field of the Invention

The present invention generally relates to clothes laundering and fabric care facilities, and more particularly to an integrated laundry center that incorporates multiple fabric care features and functions into an organized and integrated center for increasing efficiency and ease of performing multiple fabric care functions.

### 2. Description of the Related Art

A typical laundry room for a home or apartment is at best disorganized and cluttered. There are a number of reasons for this phenomenon that are common to nearly every laundry room. In most homes, up to 40% of all items washed in a washing machine are not dried in the conventional tumble dryer because the clothing can be damaged by exposure to excess heat and mechanical stress. This large amount of undried clothing must be air dried and is therefore relegated to clothes lines, drying racks, card tables, door knobs, laundry tubs, shower curtain rods and the like. This excess undried clothing is therefore scattered throughout the home and typically requires excessive drying times. As a result, the laundry room and other areas of the home become cluttered, disorganized and unpleasant to look at and to work within.

Additionally, a typical laundry room does not provide an area for sorting and folding clothing. Piles of dirty clothes are left in baskets or directly on the floor near the washing machine cluttering up the floor space within the laundry room. Piles of clean, dry clothing are left stacked in laundry baskets or on tables scattered throughout the laundry room and other rooms in the home. In many homes, dry clothing that has not yet been folded is carried to other areas of the home resulting in disorganized and cluttered spaces other than the laundry room.

Doing laundry today requires retaining a number of different laundry products including stain removers, detergents, bleaches, softeners, and other agents that are used to clean, dry and deodorize clothing. Storage space for these containers within a laundry room is typically not convenient or even available. Therefore, either a person doing the laundry must expend excess time and energy retrieving and replacing these products for each laundry load or the products simply are left out near the washing machine and dryer which further clutters up the space.

Many clothing items today still must be ironed in order to remove wrinkles. The ironing process is also often conducted in areas of the home other than the laundry room for convenience, for entertainment while ironing such as music or television, or simply to avoid the cluttered and disorganized laundry room environment. A person doing the ironing must continuously move and store the ironing board and iron as well as other products used while ironing. The iron takes up space as does the ironing board within storage closets in the home or within storage areas in the laundry room. Oftentimes, the iron and board are simply left up in the laundry room near the washer and dryer adding further disorganization and clutter to the laundry room. Other times, the ironing board and iron are left standing in an often frequented room of the home such as the living room near a television causing unnecessary clutter and creating a less than pleasing aesthetic appearance.

New products are being utilized and are becoming more readily available that are used to refresh clothing such as removing of odors and wrinkles from clothing. These products and processes sometimes require a separate cabinet used for deodorizing and steam de-wrinkling of clothing. Storage of the cabinet and/or products utilized to perform these functions causes additional problems of disorganization, clutter and inefficient use of space throughout the home.

### SUMMARY OF THE INVENTION

One object of the present invention is to provide an integrated laundry center that organizes all of the equipment and products used in the home to launder clothing and care for fabrics. Another object of the present invention is to provide an integrated laundry center that is an aesthetically pleasing aspect of the home environment. A further object of the present invention is to provide an integrated laundry center that incorporates a washing machine and a clothes dryer within the center. A still further object of the present invention is to provide an integrated laundry center that provides supplemental drying of clothes that are not usually dried in a conventional tumble dryer. Another object of the present invention is to provide an integrated laundry center that provides a flow of air for supplemental drying of clothing that is not dried in the conventional dryer. Yet another object of the present invention is to provide an integrated laundry center that includes one or more work surfaces for folding and sorting clothing. A still further object of the present invention is to provide an integrated laundry center that includes easily accessible and convenient storage space for laundry products such as detergents, bleaches and the like. Another object of the present invention is to provide an integrated laundry center that can be controlled from a single user interface including many or all functions of the laundry center. A still further object of the present invention is to provide a method of designing such an integrated laundry center that is consumer interactive.

These and other objects, features and advantages are provided by one or more aspects of the integrated laundry center of the invention. In one embodiment, an integrated laundry center includes an integrated cabinet assembly defining a plurality of discrete spaces. A washing machine is at least partly housed within a portion of the cabinet assembly. A clothes dryer is also at least partly housed within a portion of the cabinet assembly. A plurality of exterior decorative fascia panels are also provided as part of the cabinet assembly. Each of the exterior decorative fascia panels can be coordinated and selected to provide a desired aesthetic appearance for the integrated laundry center.

In one embodiment, the cabinet assembly includes an integrated frame structure having a plurality of interconnected frame elements. A plurality of panels are supported by the frame structure and define the plurality of discrete spaces. At least a portion of the panels comprise the exterior decorative fascia panels. In one embodiment, the decorative fascia panels are removable from the cabinet assembly and are replaceable on the cabinet assembly permitting easy disassembly and changeover from one design to another as desired. In one embodiment, the decorative fascia panels are selectable from a variety of different fascia panel designs.

In one embodiment, the washing machine and the dryer are housed within a predetermined washer discrete space and a dryer discrete space, respectively within the cabinet assembly. In one embodiment, the washing machine is mounted on a slidable support and is slidable into and out of the washer discrete space. In another embodiment, the dryer is also similarly mounted so that it can slide into and out of the dryer discrete space. The construction of the washer and dryer can vary considerably and can include horizontal axis washers, vertical axis washers, top load washers, front load washers, gas heated dryers, electric heated dryers and combination washer-dryer units.

In one embodiment, the integrated laundry center can include one or more shelves or work surfaces that can optionally be slidable into and out of the cabinet assembly. The work surfaces or slidable shelves can be arranged virtually anywhere on the integrated laundry center as needed.

In one embodiment, the integrated laundry center includes one or more supplemental drying discrete spaces wherein each of the discrete spaces includes at least one clothes supporting device. The clothes support device can be a rod for receiving clothes hanging on hangers, can be a rack for draping clothes directly over the rack, can be a shoe drying stand, or can be horizontal flat surface for drying clothing such as sweaters. In one embodiment, the supplemental drying discrete space or spaces can include air inlets and air outlets that communicate with the respective discrete spaces. An air moving device can be provided that communicates with the various inlets and outlets to permit air to circulate through one or more of the discrete spaces to assist in drying clothing held therein. In one embodiment, the horizontal drying surface includes a plurality of drawers wherein each drawer has a bottom horizontal flat surface that is perforated of a mesh construction. This construction permits air to contact both sides of the clothing lying within each drawer to assist in drying the clothing. The size, configuration and arrangement of the supplemental drying discrete spaces can vary considerably according to the needs of a particular home. One or more of the supplemental drying discrete spaces can also include a front panel on a drawer or a shelf or can include an openable cover panel or door hinged to the cabinet assembly that is also in the form of a decorative fascia panel.

In one embodiment, the integrated laundry center includes a control system having a user interface that can be operated by a user to control operational parameters of the washing machine and the clothes dryer. The user interface can be a touch screen electronically coupled to the washing machine and the clothes dryer wherein the screen provides operation parameter information for both that can be accessed and selected by the user. The control system can also be adapted to control operation parameters of any supplemental drying system associated with the integrated laundry center as well.

In one embodiment, the integrated laundry center also includes an ironing discrete space that is housed within the cabinet assembly. An ironing board and an iron can be stored in the ironing discrete space. In one embodiment, the ironing board is mounted within the ironing discrete space and is movable between a storage position within the discrete space and an ironing position at least partly extended from the discrete space. In one embodiment, the iron can be connected to a source of steam within the ironing discrete space to charge the iron with steam.

In one embodiment, the integrated laundry center also includes a vacuum discrete space housed within the cabinet assembly. A vacuum cleaner can be stored within the vacuum discrete space. In one embodiment, a vacuum pump is built into the integrated laundry center. An elongate flexible hose is connected to the vacuum pump within the vacuum discrete space. The flexible hose is stored within the vacuum discrete space and can be extended from the discrete space for use.

In one embodiment, the integrated laundry center includes at least one chemical storage discrete space that is adapted to store chemical products and product containers used for fabric care associated with the laundry center. In one embodiment, a chemical dispensing system is coupled to at least the washing machine and is connectable to at least one of the product containers. The dispensing system is for delivering a chemical product from the container to the washing machine. In one embodiment, the dispensing system dispenses liquid laundry detergent to the washing machine. In one embodiment, the original container for the chemical products are used and stored within the laundry center. An original cap of the original container is removed and replaced with a system cap that is coupled to the chemical dispensing system. In one embodiment, two of the product containers for each chemical product are stored. The chemical dispensing system can automatically switch from one of the containers to another when the one container is empty. In one embodiment, the chemical storage discrete space includes one or more drawers that each adapted to hold one or more of the product containers therein. Each of the drawers is capable of sliding into and out of the chemical storage discrete space.

In one embodiment, a control system having a user interface is operable by a user to control operation parameters of the washing machine, the clothes dryer, the iron, the vacuum, each supplemental drying system, and the chemical dispensing system.

In another embodiment of the invention, a supplemental clothes drying system includes a cabinet structure that defines at least one discrete space therein. An opening in the cabinet structure provides access to the discrete space. At least one clothes supporting device is disposed within the discrete space. One or more air inlets and one or more air outlets communicate with the discrete space and with one or more air moving devices that can circulate air through the discrete space via the inlets and the outlets.

In one embodiment, the clothes supporting device is a rod that extends across the top end of the cabinet structure for supporting clothes carried on clothes hangers. In another embodiment, the clothes supporting device is a slidable rack that is slidable into and out of the discrete space and supports clothes draped over the rack within the space. In a further embodiment, the clothes supporting device is at least one horizontal perforated surface supported within the discrete space that permits air to pass through the perforated surface to contact clothing laid flat on the surface. In one embodiment, the perforated surface is a bottom surface of the drawer that is slidable into and out of the discrete space. In one embodiment, the supplemental clothes drying system includes a plurality of the drawers arranged vertically relative to one another within the cabinet structure.

In another embodiment of the invention, an integrated laundry center includes an integrated cabinet assembly defining a plurality of discrete spaces. A washing machine is at least partly housed within a washer discrete space of the cabinet assembly. A clothes dryer is at least partly housed within a dryer discrete space of the cabinet assembly. A supplemental clothes drying system is associated with a supplemental drying discrete space and has a clothes supporting device disposed within the discrete space. An air moving device that is separate from the clothes dryer can circulate air through the supplemental drying discrete space to assist in drying clothes held therein. In one embodiment, the supplemental drying system is a hanging clothes dryer. In another embodiment, the supplemental drying system is a slidable clothes rack dryer. In another embodiment of the invention, the supplemental drying system is a horizontal drawer stack drying system.

In another embodiment of the invention, an integrated laundry center includes an integrated cabinet assembly that defines a plurality of discrete spaces. A washing machine is at least partly housed within a washer discrete space of the cabinet assembly. A clothes dryer is at least partly housed within a dryer discrete space of the cabinet assembly. A control system has a user interface that is operable by a user to control operation parameters of the washing machine, the clothes dryer, and other functions of the integrated laundry center.

In one embodiment, the integrated laundry center also includes a supplemental clothes drying system associated with a supplemental drying discrete space and has a clothes supporting device disposed within the discrete space. An air moving device that is separate from the clothes dryer can circulate air through the supplemental drying discrete space. The operational parameters of the supplemental drying system are also operable and controllable by the user utilizing the interface.

In one embodiment, the integrated laundry center also includes a television carried by a portion of the cabinet assembly wherein operation parameters of the television are operable by the user utilizing the interface. In one embodiment, the integrated laundry center also includes an audio system carried by a portion of the cabinet assembly. Operation parameters of the audio system are operable by the user utilizing the interface.

In another embodiment of the invention, a method of designing an integrated laundry center includes first providing a database containing information on at least a plurality of optional laundry center functional modules, optional module decorative features, and optional equipment. The database is accessed and then the optional functional modules, decorative features, and equipment are displayed. Desired ones of each are then selected. A specific desired arrangement for the selected modules, decorative features, and equipment is then specified.

In one embodiment, the step of providing further includes providing an electronic database containing the information. In another embodiment, the step of accessing also includes connecting to an Internet website of a laundry center provider and accessing the database using a computer. In a further embodiment, the step of displaying includes displaying the optional functional modules, decorative features, and equipment on a computer screen. In one embodiment, the step of selecting includes interacting with a computer to select certain optional functional modules, decorative features, and equipment displayed on a computer screen. In one embodiment, the step of specifying includes manipulating images representing the selected functional modules, decorative features, and equipment and displayed on the computer screen in order to rearrange the images according to a desired arrangement. In another embodiment, the step of specifying also includes entering data into a computer wherein the data represents at least room dimensions for a room into which the designed laundry center is to be installed.

In one embodiment, the method of designing an integrated laundry center also includes submitting a designed laundry center to a professional laundry center designer by downloading the designed laundry center to an Internet website of the designer. In another embodiment, the method also includes submitting a purchase order for a designed laundry center including the selected and arranged functional modules, decorative features, and equipment to a laundry center provider.

These and other objects, features and advantages of the present invention will become apparent upon a review of the detailed description and the accompanying drawings. Although particular embodiments are illustrated in the accompanying drawings and described in the detailed description, it is apparent that changes and modifications can be made to the disclosed embodiments and yet fall within the scope of the present invention. The illustrated and described embodiments are provided in order to illustrate aspects of the present invention and not to in any way limit the scope of the invention.

### BRIEF DESCRIPTION OF THE DRAWINGS

FIG. 1 illustrates a front view of one embodiment of an integrated laundry center constructed in accordance with the present invention.
FIG. 2 illustrates a front elevation of another embodiment of an integrated laundry center constructed in accordance with the present invention.
FIG. 3 illustrates a front elevation of yet another embodiment of an integrated laundry center constructed in accordance with the present invention.
FIG. 4 illustrates a front elevation of one embodiment of a supplemental clothes drying system constructed in accordance with the present invention and incorporated into a laundry center.
FIG. 5 illustrates a front elevation of another embodiment of a supplemental clothes drying system constructed in accordance with the present invention and integrated into a laundry center.
FIG. 6 illustrates a side sectional view of another embodiment of a supplemental clothes drying system constructed in accordance with the present invention and integrated into a laundry center.
FIG. 7 illustrates a front elevation of another embodiment of a supplemental clothes drying system constructed in accordance with the present invention and integrated into a laundry center.
FIG. 8 illustrates one drawer of the supplement clothes drying system of FIG. 7 wherein the decorative front fascia panel has been removed.
FIG. 9 illustrates another embodiment of a drawer construction for the supplemental clothes drying system of FIG. 7.
FIG. 10 illustrates a front elevation of retractable work surfaces integrated into a laundry center.
FIG. 11 illustrates a front elevation of one embodiment of additional storage spaces for an integrated laundry center and of an illumination source for a portion of an integrated laundry center.
FIG. 12 illustrates a front elevation of one embodiment of an ironing discrete space constructed in accordance with the present invention and integrated into a laundry center.
FIG. 13 illustrates a front elevation of another embodiment of an ironing discrete space integrated into a laundry center.
FIG. 14 illustrates a front elevation of one embodiment of a convenient laundry product storage and smart dispensing system of an integrated laundry center of the invention.
FIG. 15 illustrates a front elevation of one embodiment of a vacuum discrete space constructed in accordance with the present invention and integrated into a laundry center.
FIG. 16 illustrates a front view of one embodiment of a user interface of a control system for accessing and controlling functions and processes of various modules and equipment of an integrated laundry center.
FIG. 17 illustrates a schematic representation of one embodiment of an air flow system for an integrated laundry center including a conventional clothes dryer and a plurality of supplemental clothes drying systems constructed according to the present invention.
FIG. 18 illustrates a schematic representation of another embodiment of an air flow system for an integrated laundry center including a clothes dryer and a plurality of supplemental clothes drying systems.
FIG. 19 illustrates a side cross sectional view of one embodiment of air passages for a supplemental clothes dryer discrete space.
FIG. 20 illustrates one embodiment of a flow chart for a method of designing an integrated laundry center in accordance with the present invention.
FIGS. 21-23 illustrate several different arrangements of the integrated laundry center modular components illustrated in FIG. 1 on a display screen.
FIG. 24 illustrates a schematic of one embodiment of a control system for operating an integrated laundry center.

### DETAILED DESCRIPTION OF THE PREFERRED EMBODIMENTS

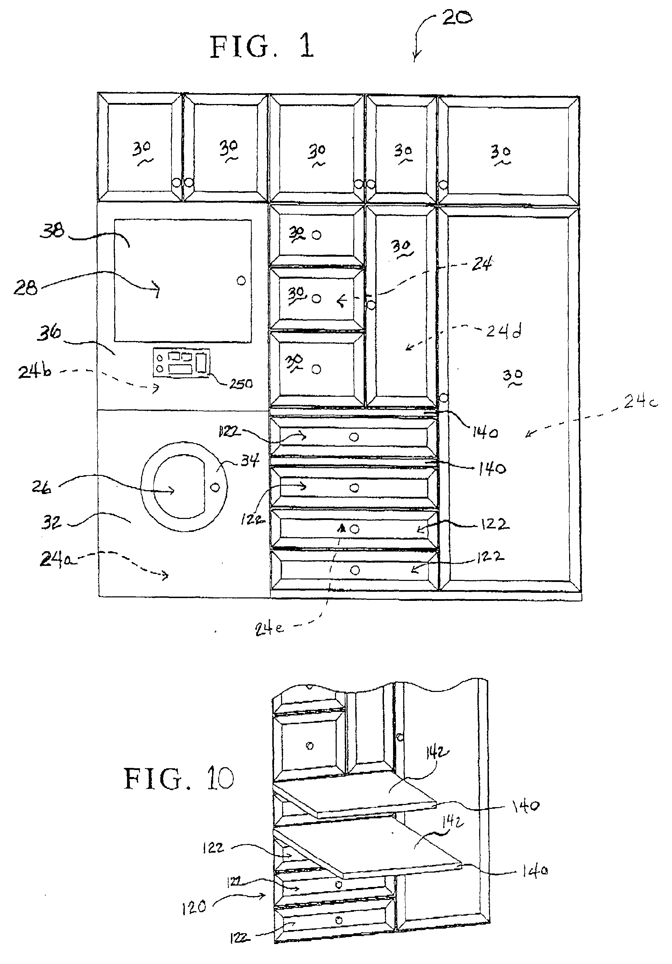

Referring now to the drawings, FIG. 1 illustrates a front view of one embodiment of an integrated laundry center 20 of the invention. In general, the integrated laundry center 20 includes an integrated cabinet assembly 22 defining a plurality of discrete spaces 24. The term "discrete spaces" is utilized herein to describe separate discrete sections, surfaces, cabinets and enclosures that are formed by the cabinet assembly 22. The term "cabinet assembly" is utilized herein to define the structural assembly that is formed from various structural components that can include a framework, enclosure panels, interconnecting panel elements, securing fasteners, support surfaces, mounting and assembly brackets, and the like. As will become apparent to those skilled in the art, the materials and particular structural details of the cabinet assembly 22 can vary considerably and yet fall within the scope of the present invention.

The integrated laundry center 20 of the invention can also include a washing machine 26 that is at least partly housed within a portion of the cabinet assembly 22. The center 20 also includes a clothes dryer 28 that is at least partly housed within a portion of the cabinet assembly 22. The cabinet assembly 22 of the laundry center 20 also includes a plurality of exterior decorative fascia panels 30 that are associated with the cabinet assembly. The fascia panels 30 are intended to provide an aesthetically pleasing and coordinated design, if so desired, so that the integrated laundry center 20 hides or masks the laundry facilities and significantly enhances the appearance and appeal of a laundry room in a home.

Each of the discrete spaces 24 of the cabinet assembly 22 can provide a particular laundry function or feature that is organized and efficiently arranged within the laundry center. Many different laundry functions can be performed by individuals using the laundry center wherein virtually all of the laundry equipment, cleaning supplies, and various laundry functions are housed within the cabinet assembly 22 and provided by the laundry center 20. Many of these different functions, equipment options, and other features are described below in greater detail.

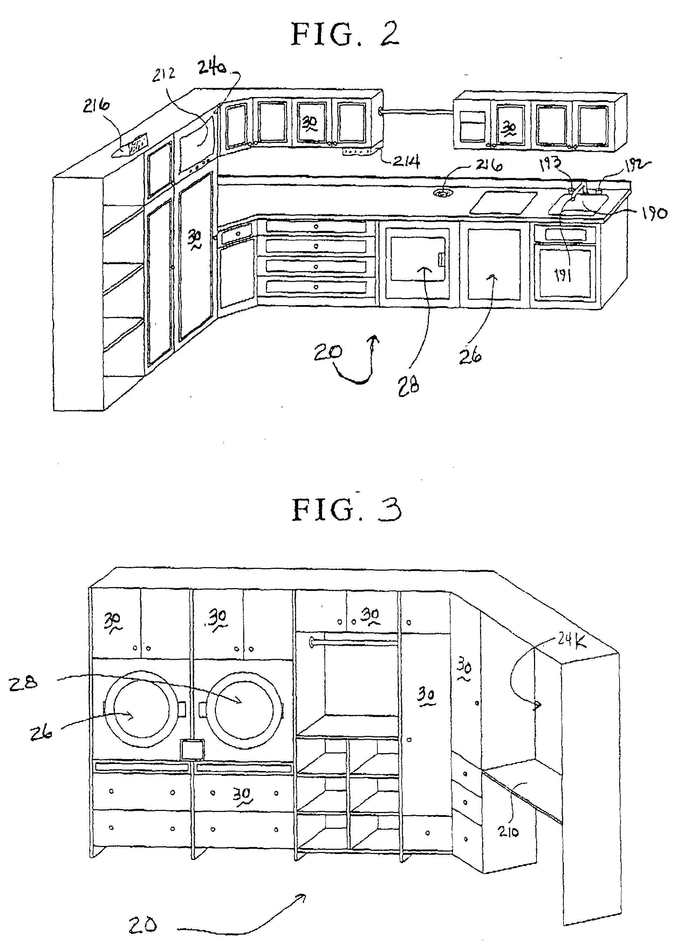

Initially, one should note that the type of washing machine 26 and clothes dryer 28 can vary considerably and yet fall within the scope of the present invention. For example, the washing machine 26 can be a front loading horizontal axis washing machine that has a wash basket spinning about a substantially horizontal axis. This type of washing machine typically has a door on the front providing access into the wash basket. Such a washing machine is illustrated in general built into the laundry center 20 shown in FIGS. 1 and 3. As an alternative, the washing machine can also be a horizontal axis washing machine that loads from the top or can be a more conventional vertical axis washing machine wherein the wash basket spins about a vertical axis and wherein the washing machine loads from the top. Such a top loading machine 26 is illustrated in the laundry center 20 of FIG. 2 which is arranged from the center illustrated in FIG. 1 differently. In addition, the type of dryer 28 can also vary and can include a conventional tumble dryer having a drum that rotates about a horizontal axis. Such dryers typically load from the front as is illustrated in each of the embodiments of FIGS. 1, 2 and 3.

As can be seen in FIGS. 1, 2 and 3, the arrangement of the various equipment and functions of the laundry center 20 can vary considerably according to the needs of a particular consumer. The features provided in a laundry center 20 can also vary considerably depending on the intended cost of the system, design requirements of the system and the space constraints for a particular system. The laundry centers 20 of FIGS. 2 and 3 illustrate various arrangements and options. The laundry center 20 shown in FIG. 1 is described in more detail immediately hereafter to illustrate the many aspects of the present invention. A limitless array of laundry center constructions and arrangements is possible.

In one embodiment of the invention, the integrated laundry center 20 includes exterior decorative fascia panels 30 that permit a laundry center design to be uniquely suited to a particular consumer and coordinated to match other design characteristics within a particular home environment. Each discrete space 24 can include a separate fascia panel 30 or more than one fascia panel that either covers an opening in the discrete space or provides an aesthetically pleasing exterior finish for the discrete space 24.

As an example, all of the mechanical components of the washing machine 26 or the dryer 28 can be built directly into the cabinet assembly 22 and supported by bracketry therein. The traditional metal shell of the washer and dryer could be eliminated. A front fascia panel such as a panel 32 can cover a washer discrete space 24a, hiding all of the components of the washing machine. The fascia panel 32 can be selected from numerous optional designs and materials to coordinate with other aspects of the cabinet assembly as well as other aspects of the environment into which the laundry center is to be installed. In the embodiment illustrated in FIG. 1, a conventional washing machine door 34 is provided on the fascia panel 32 of the washer discrete space 24a that is openable and provides access to the wash basket of the machine.

In an alternative embodiment, as is illustrated for the clothes dryer 28, a front fascia panel can incorporate two separate sections including a stationary fixed section 36, similar to the panel 32 above, and a separate dryer door section 38 that also coordinates aesthetically with the fixed section 36. The door section 38 is openable relative to the fixed section 36 for providing access into the dryer 28. This design for the dryer is also particularly useful when the dryer components are built directly into one of a discrete space 24b and supported on bracketry within the discrete space. The built-in construction for the washer and dryer components can be used for high-end, more expensive laundry center designs. As an alternative, conventional washers and dryers including the steel outer skin can be received within their own discrete spaces 24a and 24b and include a fascia panel 30 covering the front of each of the discrete spaces to hide the outer skin of the washer and dryer. Alternatively, the outer skin can be visible, similar to the way dishwashers are currently provided in homes and coordinated with the rest of the laundry center. In this manner, the washer and dryer are visible but at least partly housed within their own discrete spaces 24a and 24b of the cabinet assembly 22.

Each of the exterior decorative fascia panels 30 of the laundry center 20 can cover a different discrete space 24 and provide an aesthetically pleasing appearance. The fascia panels can be selected to enhance the decor of a room within the home or, at a minimum, to coordinate with other aspects of the cabinet assembly 22 in order to provide a pleasing appearance for the laundry center 20.

In one embodiment, each of the fascia panels 30 is of a modular construction and is easily removable from the cabinet assembly 22 and is replaceable on the cabinet assembly. In this manner, the fascia panels can be interchanged in order to change the appearance of the laundry center 20 when decor requirements or tastes of the consumer change. The fascia panels 30 can be provided with hooks that simply hook onto receptors of the cabinet assembly 22. Alternatively, the panels can be provided with locators to position the fascia panels properly relative to their corresponding discrete spaces 24 and then be fastened using conventional threaded fasteners or hook and loop fasteners such as VELCRO® . Each of the fascia panels can also be mounted by providing one or more hinges on a panel so that the fascia panel defines a door for its associated discrete space, similar to kitchen cabinets. Some of the facie panels can also be provided on slidable drawers as a front surface for the drawer that is visible from the exterior.

In one embodiment of the invention, the integrated laundry center 20 includes one or more supplemental clothes drying systems, each housed within one of the discrete spaces 24. In most homes, up to 40% or nearly half of all laundry that is washed is not dried using the conventional dryer that utilizes heat, air flow, and mechanical agitation in order to effect drying. Many fabrics are more delicate and cannot withstand the mechanical stress of a tumble dryer. Many fabrics also cannot withstand exposure to high intensity heat because they are either too delicate or the heat will cause the fabric to shrink excessively. Many items of clothing are also too fragile to be exposed to high velocity air flow at high temperatures which would otherwise damage the fabric or cause irregular discoloring or shrinkage of the fabric. These items of clothing are therefore typically left draped over an object within the home, laying flat on an object within the home or hanging from a rack, clothes line or hanger somewhere within the home in order to dry them utilizing only ambient air.

A supplemental drying system is provided according to the present invention that can accommodate each and every supplemental drying need of clothing including delicate fabrics, sweaters, stockings, shoes, gloves and the like. The supplemental drying systems of the invention assist in speeding up the ambient air drying process and yet provide efficient organization of all of these clothing items and meet all the necessary delicate drying needs of these clothing items.

In one embodiment, a supplemental drying system is a hanging clothes dryer 50 for drying hanging clothing and is provided in a hanging clothes discrete space 24c. This discrete space is large enough to receive shirts and pants or the like hanging from clothes hangers so that they can extend to their full length as needed and not touch a bottom surface 52 of the discrete space 24c. The discrete space 24c also includes a top surface 54. Disposed near the top surface is at least one clothes hanger support that can support at least one item of clothing. In the present embodiment, the clothes hanger support is a rod 56 that extends across the entire width of the discrete space 24c near the upper end. As will be apparent to those skilled in the art, a plurality of individual hanger supports such as hooks can be provided depending from top surface 54 or from the opposed side surfaces 58 of the space 24c.

In one embodiment, the supplemental hanging clothes dryer 50 has a decorative front fascia panel 60 in the form of a hinged door that provides access to the interior of the discrete space 24c. In an alternative embodiment, the hinged door can be left off so that the hanging clothes dryer is simply an open space within the laundry center 20 that is large enough for hanging and storing clothes either while they air dry or after they are dried and prior to moving them to the appropriate location within the home. In one embodiment, air can be circulated through the discrete space 24c from a supplemental air delivery system which is described in more detail below. This air can be slightly heated if desired or can simply be at ambient temperature. Air can be supplied through an inlet and vented through an exhaust or outlet to circulate moving air over the clothes hanging within the supplemental dryer 50. The circulated air more quickly dries the clothing without exposing the clothing to the harsh tumble dryer environment.

In one embodiment, the hanging clothes dryer 50 can also incorporate a chemical dispensing system for dispensing chemicals into the discrete space 24c to enhance the fabrics of clothing hanging on the hangers. The chemical dispensing system in one embodiment can include a plurality of dispensing inlets 62 can dispense chemical products in the form of a gas or small liquid droplets into the discrete space. The products contact clothing held therein. For example, the chemicals can include color maintenance chemicals, wrinkle resistance chemicals, fragrance chemicals, static elimination chemicals or the like. In an alternative embodiment, described in more detail below, the fabric enhancement chemicals can be dispensed by mixing with the air circulated through the discrete space 24c.

In one embodiment, the integrated laundry center 20 can also include an additional supplemental drying system for drying miscellaneous clothes items that are typically hung on a rack. A supplemental rack dryer 70 is provided in a clothes rack discrete space 24d. This discrete space is large enough to receive a sliding rack mounted therein that can be extended outward beyond a front opening 74 of the space and can be retracted or returned into the space. The slidable rack 72 includes one or more cantilevered supports or rods 76 for hanging miscellaneous clothing items such as socks or stockings. The rack 72 is disposed near a top surface 78 of the discrete space 24d so that any clothes hanging from the rods 76 can drape downward from the rack 72.

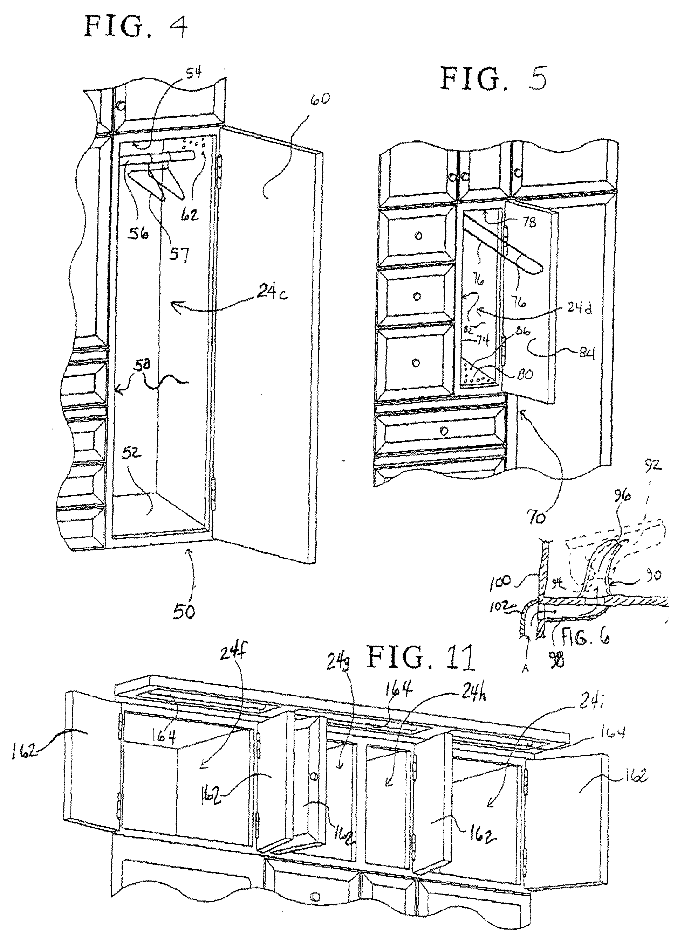

The discrete space 24d of the supplemental rack dryer 70 also includes a bottom surface 80, a pair of side surfaces 82 and a back surface (not shown). The discrete space 24d of the supplemental rack dryer 70 can also be an open space with no front fascia covering the opening 74. In the embodiment illustrated in FIG. 5, the discrete space 24d includes a hinged front fascia panel 84 or door that can open as illustrated to provide access into the space and can close forming a completely enclosed space. The front cover panel 84 is also a decorative fascia panel matching other exterior components of the laundry center 20 to provide an aesthetically pleasing appearance as discussed above.

In one embodiment, the supplemental rack dryer 70 can also include circulated air passing through the space in order to accelerate the drying process for any clothing items stored within the space. In one embodiment, the circulated air system includes an air inlet and an air vent permitting air to be passed completely through the discrete space 24d as described in greater detail below. The circulated air can again be slightly heated in order to further accelerate the drying process or can simply be ambient air taken from the room in which the integrated laundry center 20 is installed.

In a further embodiment, the supplemental rack dryer 70 can also include provision for dispensing chemicals to enhance fabrics similar to that described for the supplemental hanging clothes dryer 50 above. For example, a plurality of openings or dispenser inlets 86 can be provided within the discrete space 24d on any surface such as the bottom surface as illustrated. Alternatively, the inlets 86 can be provided on any other surface within the discrete space 24d, or the chemicals can be mixed with the air circulating through the rack dryer 70.

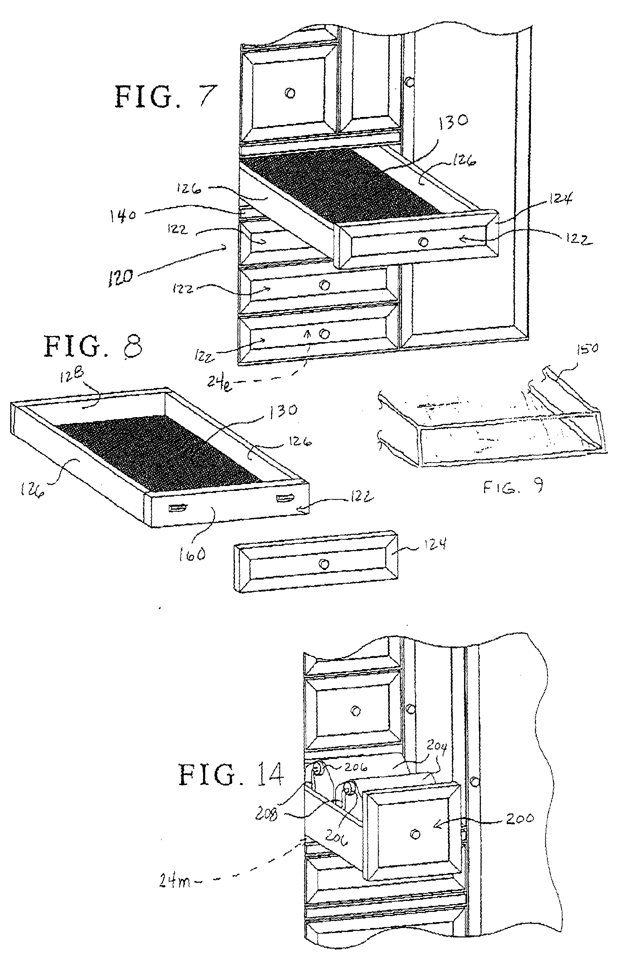

As illustrated in FIG. 6, in one embodiment the integrated laundry center 20 can also include one or more pairs of shoe drying racks 90, each for improving the drying characteristics for shoes such as the shoe 92 shown in phantom view. Shoes, gloves and the like should be dried from the inside out to prevent shrinkage, cracking and other damage. Each shoe drying rack 90 includes a stem having an interior chamber 94 that permits air to pass to an air outlet 96 in the end of the stem and into a shoe held on the rack 90. An air duct 98 can be provided communicating with the rack 90 in virtually any form. FIG. 6 illustrates an air duct passing through a discrete space below the space containing the drying rack 90. A back surface 100 of the discrete space includes an air duct connected thereto communicating through a hole in the back surface 100 with the air duct 98. Air is delivered from an air delivery system, as described in more detail below, through a delivery duct 102 into the duct 98 and into the shoe rack 90 for circulating air through an interior of a shoe. It is known that shoes dry much quicker and without damaging the shoe when dried from the inside out.

Each shoe rack 90 can be provided in a bottom surface of one of the discrete spaces such as the discrete space 24c of the clothes hanging dryer 50 or the bottom surface 80 of the space 24d for the rack dryer 70. Alternatively, the shoe racks 90 can be provided in their own discrete space if desired. The shoe racks can accommodate gloves, boots, hats and other such clothing items as well. Multiple racks 90 can also be provided in one or more of the discrete spaces.

In one embodiment illustrated in FIGS. 7 and 8, a supplemental drying system for drying clothing items that must be dried while lying flat or horizontal as illustrated, such as is required of sweaters. A supplemental horizontal drying stack 120 includes a plurality of stacked drawers 122 received in a horizontal drying discrete space 24e. Each drawer has a removable and replaceable front fascia panel 124, a pair of side panels 126, a back panel 128 and a bottom panel 130. In the present embodiment, each drawer bottom surface 130 is a perforated mesh grid providing a large number of holes or openings permitting air to freely pass through the bottom surface. In this manner, clothing can be laid flat on the bottom surface 130 and air is permitted to circulate through the bottom surface contacting both sides of each clothing item.

In one embodiment, the supplemental horizontal drying stack 120 can also include circulated air passing through each of the drawers to further enhance drying for any clothing items supported on the mesh bottom panels 130. The circulated air can either be ambient air or can be slightly heated air to further enhance the drying process. The volume of air and velocity of air flow can also be varied depending on the desired drying characteristics for the stack dryer 120. The air flow system is described in greater detail below.

The horizontal dryer 120 can include only a single drawer 122 or can include any number of drawers arranged on top of one another, side by side or in any other arrangement and yet fall within the scope of the invention. The horizontal dryer 120 permits accelerated drying of clothing items that must be laid flat when dried in order to avoid wrinkling and shrinkage and does not expose the fabric to harsh drying characteristics such as mechanical tumbling stress or high temperatures as in a conventional tumble dryer. In selecting and designing a stack horizontal dryer 120, a consumer can choose from a variety of options including the number of drawers, the size and configuration of drawers, the drawer arrangement, and the air system associated with the horizontal stack dryer. The horizontal clothes dryer 120 can also be provided with a chemical dispensing system to enhance the fabrics of clothes held therein including color maintenance, wrinkle resistance, fragrance, static elimination, and other such fabric enhancing chemicals. The integrated laundry center 20 of the invention provides a vast improvement in use of space and organization for most, if not all, of the laundry and fabric care needs for a home.

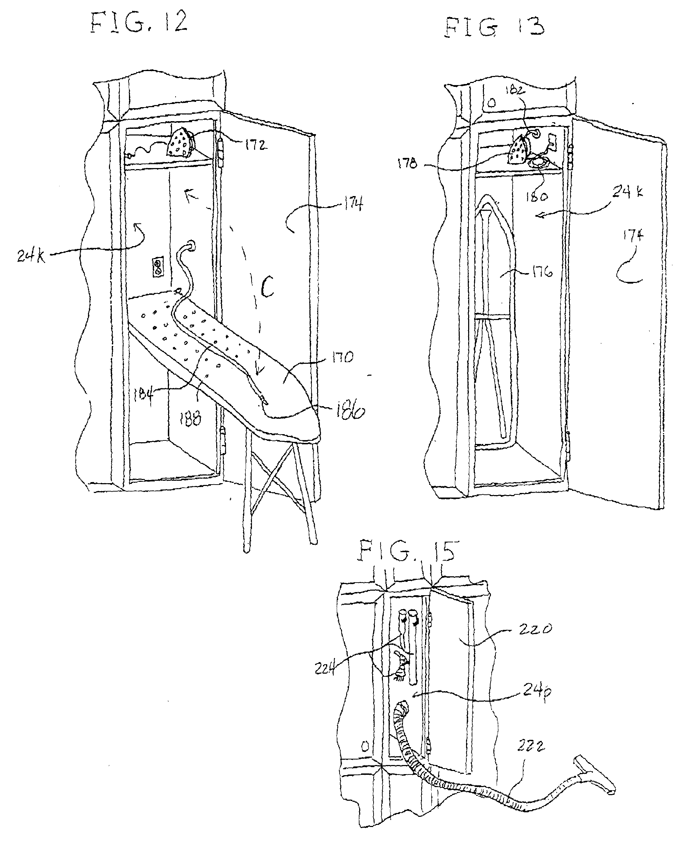

As illustrated in FIG. 9, and as discussed previously, the components of the laundry center 20 can be modular in construction. For example, each element of the integrated cabinet assembly can comprise a frame such as that of a drawer frame 150 illustrated in FIG. 9. Separate panels such as a side panel 126 can be added to the frame 150 as needed to complete the assembly of each discrete space 24 of the center 20. For example, the front fascia panel 124 of the drawer illustrated in FIG. 8 can be attached directly to the front frame members of the frame 150 of FIG. 9 using any suitable means as described above. In this manner, the frame 150 can be assembled and disassembled as needed and also can be rearranged. The front fascia panels can be replaced, installed and removed as needed directly to and from the frame 150 as needed. Each portion of the laundry center 20 can be formed in this manner using various frame and panel parts.

Also discussed above, an alternative embodiment illustrated in FIG. 8 includes constructing the integrated support assembly 22 by assembling a plurality of interconnecting panels in a desired arrangement to creating discrete spaces 24. The front fascia panels 30 can then be attached over each respective discrete space 24 as desired to provide the aesthetically pleasing appearance. Each decorative exterior fascia panel such as the drawer fascia panel 124 can be attached to an inner non-decorative panel such as the inner front panel 160 of the drawer 122 shown in FIG. 8 by any known means as discussed above.

In order to further enhance the space utilization and organization of the integrated laundry center 20, a plurality of additional discrete storage spaces 24f, 24g, 24h and 24i as shown in FIG. 11 can be provided and arranged virtually anywhere throughout the integrated laundry center 20. Each of the discrete spaces 24f - 24i can be in the form of an open space or can include a single decorative cover panel 162 or a pair of decorative cover panels 162 as illustrated for the discrete space 24f. Each of the storage spaces can be provided in any size or configuration and can be utilized to store virtually any fabric care product or equipment such as detergents, fabric softeners, bleaches, an iron, a steamer, starch, or the like.

As illustrated in FIG. 10, one or more pull out shelves 140 can be provided as a part of the laundry center 20. In the present embodiment, a pair of shelves 140 are provided with one each disposed above or between drawers 122 of the horizontal stack dryer 120. Each of the shelves 140 includes a top surface 142 that can be used for stacking and resting folded laundry, resting a laundry basket, as a laundry folding work surface, as a temporary laundry load storage surface, or as any other work necessary to perform laundry care within the home. The work surfaces 142 of the shelves 140 can be disposed and arranged as needed throughout the integrated laundry center 20. For example, as illustrated in FIGS. 1 and 10, the shelves 140 can be disposed adjacent the washer and dryer. The shelves can be utilized to support a laundry basket while filling or emptying the washing machine 26 or the clothes dryer 28. Additional shelves can be provided throughout the center as needed to provide additional work surfaces where necessary that can be withdrawn into the laundry center when not being used.

FIG. 11 also illustrates a plurality of lights 164 arranged extending from the top of the integrated laundry center 20 above the storage discrete spaces 24f - 24i. Each of the lights 164 can be positioned on an interior surface of any portion of the laundry center 20 or, as illustrated, over-hanging the front surfaces of the discrete spaces of the laundry center. The lights 164 provide illumination for each of the work surfaces and discrete spaces of the laundry center. Additional lights can be added to virtually any surface or portion of the laundry center as needed or desired in order to illuminate specific work areas, specific pieces of laundry equipment, or the like.

In one embodiment, the integrated laundry center 20 can accommodate an ironing board 170 and iron accessories. As illustrated in FIG. 12, the ironing board 170 can be built into an ironing discrete space 24k and mounted in the space. The ironing board can be moved in the direction of the arrow C between a storage position within the discrete space and an ironing position as illustrated with the board lying generally horizontal and extending from the discrete space. In an alternative embodiment, the ironing board 170 can be attached to a side or front surface of the laundry center 20 and can store in a vertical position against a portion of the laundry center and can be folded down into a horizontal position for ironing. In the embodiment illustrated in FIG. 12, a shelf is also included for storing ironing supplies such as an iron 172 and starch or the like. A decorative door panel 174 can be provided to hide the items stored in the ironing discrete space 24k.

FIG. 13 illustrates another alternative embodiment for storing an ironing board and supplies. A conventional ironing board 176 is stored in an ironing discrete space 24k. The ironing board 176 can be removed from the discrete space when the front fascia or door panel 174 is open providing access to the space. The ironing board 176 when folded up can be stored within the discrete space as is illustrated in FIG. 13. FIG. 13 also illustrates an iron 178 that is permanently electronically connected to the integrated laundry center 20 by a cord 180. Electrical power is supplied to the cord via the laundry center electronics. In one embodiment, the iron 178 can also be charged with boiling water by a removable hose or tube 182 attached to the iron. When the iron is ready for use, the steam or boiling water connection can be detached and the iron removed for use. The iron 178 can be connected to a steam or water boiler of the integrated laundry center or can be connected to a hot water supply line of a laundry room in which the laundry center 20 is installed. In a further embodiment as illustrated in FIG. 12 for convenience, a steam supply can also be provided through a hose 184 connected to the integrated laundry center 20 wherein the hose is extendable for use as a steamer over the ironing board. The hose can include an actuatable valve 186 that the user can manipulate in order to provide steam for ironing as desired.

In another embodiment, the ironing board 170 that is built into the integrated laundry center 20 as illustrated in FIG. 12 can also be connected to an air pump that can evacuate the ironing board surface. In such a manner, clothes draped over the ironing board will be drawn to the surface of the ironing board simplifying the ironing process. Air being drawn toward the ironing board will also draw steam through the fabric to be ironed into the ironing board as well. To illustrate this feature, a plurality of openings 188 are shown on the ironing board in FIG. 12. These openings can also be connected to a chemical dispensing system of the integrated laundry center 20 for providing fabric enhancing chemicals to the fabric held on the ironing board. Again, examples of such chemicals include color maintenance, wrinkle resistance, fragrance, and static elimination chemicals.

For further convenience and organization, a laundry tub or sink, commonly found in a basement in a laundry room of a home, can be incorporated into the integrated laundry center of the invention. FIG. 2 illustrates a laundry center including a laundry tub 190. The laundry tub 190 includes a water faucet 191 and hot and cold water spigots 192 and 193, respectively. Also as illustrated in FIG. 2, the integrated laundry center of the invention can be provided with ample counter space for providing additional work area and storage area for dirty and folded clean clothes as well as for other clothing care products and the like.

In one embodiment, one of the discrete spaces 24 within the integrated structural assembly 22 can be adapted for refreshing clothing fabrics. The components of a clothes refreshing appliance are disclosed in U.S. Patent No. 5,815,961 incorporated herein by reference. For example, steam can be injected into the cabinet when a front door panel is closed. The steam can be provided by a boiler and delivery system integrated into the laundry center 20 or it can be added within the selected discrete space by the user. In one embodiment, a plurality of openings such as the openings 62 disclosed in FIG. 4 can be utilized to deliver steam into a closed space for de-wrinkling fabrics. Instead of steam, a chemical de-wrinkling substance can be injected into the discrete space 24 as well. Also, a deodorizing agent can be injected into the selected discrete space 24 to provide any fabric therein with a pleasant aroma. Such chemicals are known in the industry. As another option, fabrics held within a selected discrete space can be deodorized and/or sanitized by injecting ozone into the discrete space in the same manner that the chemicals or steam would be injected. In yet another alternative, an ionic deodorizing system can be incorporated into the discrete space. In a further alternative, any combination of the above fabric refreshening options can be injected into a selected space to provide more than one function at the same time. As an example, the discrete space 24c illustrated in FIG. 4 can be utilized for refreshing clothing as well as for drying the clothing therein. Alternatively, all fabric refreshing components, including the substance dispenser, air circulation equipment, and exhaust components can be completely disposed within the discrete space 24, as shown in the 5,815,961 patent.

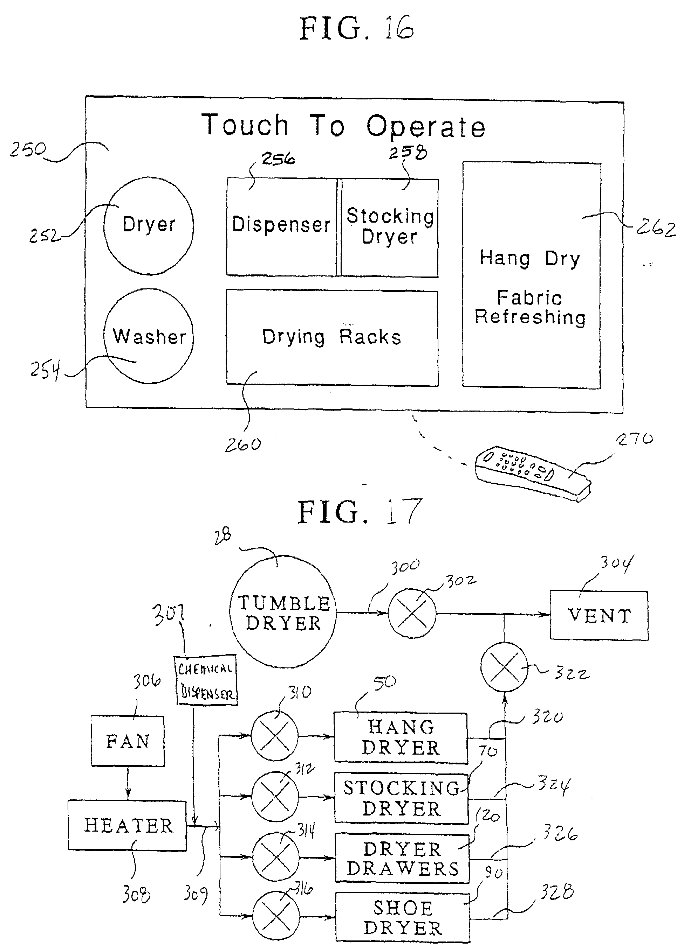

In one embodiment, one or more of the discrete spaces 24 can be adapted to accommodate storage of particular laundry care products such as laundry detergent, bleach, booster agents, or virtually any type of fabric care product. As shown in FIG. 14, a drawer 200 is received within a portion of an additional discrete space 24m. Each drawer can be adapted to store a particular size and configuration of container. In one embodiment, the laundry center 20 can be provided to include an automatic dispensing system for laundry care products. Each storage area such as the drawer 200 can be adapted to either accommodate a particular laundry care product held in its original container 204 or to accommodate a built-in system container that is filled from the original product container of laundry care product.

When utilizing the container 204 of the laundry care product, the original cap of the container can be removed and replaced by a system cap that communicates with a delivery system of the laundry care center such as the caps 206 shown in FIG. 14. The system caps 206 can include a delivery line 208 that will deliver the particular laundry care product to a desired module of the laundry center 20, such as the washing machine 26. For example, the containers 204 may each contain liquid laundry detergent. The automatic dispensing system is connected to the washing machine 26 and delivers a specified amount of detergent for each laundry load as required by the washing machine for a particular cycle. In the embodiment incorporating containers that are unique to the laundry center 20, these containers are simply filled similar to a windshield washer system for an automobile. The unique containers will remain connected to the dispensing system of the laundry center 20 at all times.

In an alternative embodiment, each container can be simply stored on a shelf that is either stationary or can be pulled out from the laundry center for convenience. The products would be dispensed manually as is typically done. The drawers 200 provide for a more aesthetically pleasing appearance. The dispensing system provides a more convenient optional feature.

In one embodiment, the system can be adapted to hold two or more containers of each laundry care product. In such a system, when a first container is empty, the system can be programmed to automatically switch over to the second container and also to automatically warn a user that a particular product is running low. A sensor can be provided in the containers 204 or the caps 206 in order to determine when a container is empty and when the dispensing system switches over to a secondary container.

Many further embodiments of the present invention are possible so that the integrated laundry center 20 can include a number of additional elements. For example, the integrated laundry center 20 can include a home dry cleaning machine (not shown) housed in a separate discrete space 24 of the integrated cabinet assembly 22. As another example, a separate sewing center (not shown) can be incorporated into the integrated laundry center 20. The cabinet assembly 22 can be adapted to include convenient storage of a sewing machine, all sewing accessories, adequate lighting, adequate work surfaces, and convenient access and seating as desired by a particular user. For example, the sewing machine can be stored in one of the discrete spaces 24 and hidden by a decorative front fascia panel for the space. The sewing machine can be pulled out as needed and replaced when not in use.

It is also possible that the sewing center, though stored within the integrated structural assembly 22, can be set on its own support and moved to a different location. In one embodiment, the sewing center and its separate support can be provided with rollers for easy moving of the sewing center when use is required. Alternatively, the sewing center including the sewing machine can be mounted by separate slidable or pivotable frame within the discrete space and can be moved between a storage position and a sewing position when needed. The frame can be integrated into the cabinet assembly 22 of the laundry center 20. The sewing center can be adapted for manual set up and storage or can be adapted to include an automatic mechanism for raising and lowering the sewing machine. The separate lighting system can be provided to illuminate a sewing area as desired as well.

As another example, the integrated laundry center 20 can be provided with entertainment equipment for use with the laundry center. For example, a television, VCR, stereo, or even a personal computer can be integrally incorporated into the integrated laundry center 20. Referring to FIG. 3 a discrete space 24n can be provided having an open front and can include one or more shelves 210 that can carry a television, VCR, stereo equipment, personal computer or the like. Alternatively, a television 212 can be built into its own separate discrete space 24o and optionally hidden by a decorative fascia panel. Similarly, a stereo system 214 can be built into the integrated laundry center providing controls accessible by a user for selecting the entertainment medium, volume and the like. Speakers 216 can be provided integrally built into the system as illustrated in the integrated laundry center of FIG. 2.

As another example, the integrated laundry center 20 can be provided with another discrete space 24p that can house a vacuum cleaner and accessories. In one embodiment, a conventional vacuum cleaner can be stored within the discrete space 24p and be hidden behind a front fascia or door panel 220. The vacuum cleaner can simply be removed and utilized when needed and replaced and stored within the discrete space 24p.

In another embodiment illustrated in FIG. 15, the integrated laundry center 20 can be provided with a built- in vacuum cleaning system. The vacuum pump for the vacuum cleaner can be mounted within the cabinet assembly and provided with electrical power. An extendable hose 222 is connected to the vacuum pump (not shown) within the discrete space 24p and can be pulled from the discrete space in order to vacuum anything within reach of the hose 222. The discrete space 24p can also be adapted to store and retain all the necessary vacuum accessories 224 including different vacuum nozzle tips, vacuum bags and the like.

As a further example, the integrated laundry center 20 can be provided with a separate hand held steamer (not shown) for wrinkle removal and sanitization of fabrics. In one alternative, the hand held steamer would be similar to the steam hose 184 associated with the ironing board 170 in FIG. 12. The hand held steamer can be attached to the end of the hose and can be extended from the discrete space and utilized when needed. As another alternative, a hand held steamer (not shown) can be housed within one of the discrete spaces of the cabinet assembly 22 and plugged into an internal boiler of the laundry center 20. The steamer could then be charged with boiling water, disconnected from the boiler connection within the discrete space and utilized when needed. The hand held steamer would therefore only have to provide insulation for the boiling water therein and would otherwise not be connected to the integrated laundry center. Such a hand held steamer would be similar to the iron 178 shown in FIG. 13.

In one embodiment, the entire integrated laundry center 20 including most or all of its functions can be controlled at a single control system by a user of the laundry center. Each module of the laundry center 20 including the washer module, dryer module, supplemental drying modules, dispenser system module and ironing module and each electronic device including the television and stereo can be electronically operated by the control system. Referring to FIG. 16, a user interface in the form of a touch screen 250 is illustrated. The user interface 250 is also shown in FIG. 1 incorporated into the laundry center 20 just below the door panel 38 of the dryer 28. The touch screen 250 shown in FIG. 16 illustrates a plurality of screen regions that can be touched in order to bring up various selectable operation controls for the indicated modules and devices of the laundry center. For example, if a user touches the region 252, all of the available operation controls for the tumble dryer 28 will appear on the screen as further screen regions. A user can then select and set desired controls and parameters to operate the clothes dryer 28. For example, the individual can set a timer, select a temperature, select a drying cycle, select a start time for the drying cycle, and set or select any other functions associated with the dryer.

Similarly, if a user selects the screen region 254, all of the various selectable operation controls of the washing machine 26 will appear on the screen as further screen regions. A user must then simply touch a selected screen region to set and select various parameters for each available control of the washing machine. For example, selectable parameters for the washing machine can include choosing a wash cycle or hand wash cycle, a wash cycle time period, a water level or load size, a water temperature, a wash start time and any other available washer functions. Additionally, as discussed above regarding the automatic dispensing system shown generally in FIG. 14, additional selectable parameters for the washing machine 26 can include selecting the amount or type of detergent, selecting bleach, or selecting any other wash chemicals. The dispensing system can be tied into the user interface 250 and, depending upon the operation parameters chosen for a particular function, automatically determine what chemicals should be dispensed and the amount to be dispensed. On the other hand, a less expensive system can be designed wherein the user must select each chemical and, possibly, the amount of each chemical to be dispensed. In another embodiment, the dispenser system can be adapted for dispensing an amount of any chemical, steam, water or the like for the entire integrated laundry center 20. In such an embodiment, a separate screen region 256 can be included that will bring up all of the selectable parameters for the dispenser system when this region is touched.

Separate touch screen regions such as regions 258, 260 and 262 can also be included on the initial touch screen of the interface 250 for each additional function provided on the integrated laundry center 20. A number of different screens may be necessary to display all of the available options. For example, the stocking or rack dryer 70 shown generally in FIG. 5 can be accessed through its own screen region 258. Similarly, the shoe drying racks 90 can also be accessed through a separate screen region 260. Further, the hanging clothes dryer 50 can be accessed through its own separate screen region 262. This same region can also access all of the functions for various fabric refreshing options if such fabric refreshing options are available in the same discrete space 24c that houses the hanging clothes dryer 50.

Each and every module or system of the integrated laundry center 20 can be electronically coupled to the control system and be accessed by the user interface 250 so that the function and operation for each can be controlled by the user at one location. For example, a television that is incorporated into the laundry center 20 may be accessible through the user interface that permits control of the on/off function, volume, channel changing capability and the like for the television. Additionally, a stereo system can also be accessed through the user interface wherein band changing, channel changing, volume, and sound media functions can be accessed and controlled. Similarly, the operation of a steam system provided for an iron, a steamer, a steam de-wrinkling cabinet or the like can also be operated through the user interface. If a vacuum system is built into the integrated laundry center 20, it to can also be accessed through the user interface if so desired.

A remote control 270 may also be provided that can communicate with the user interfaced 250 and/or communicate with each separate module or system of the integrated laundry center 20. A user can simply manipulate the remote control 270 to select or alter operation features of a particular device as desired.

In another alternative embodiment, the user interface 250 can be a liquid crystal display or LCD that provides a multi-layered graphical user interface. The display can be operated by touch screen as shown in FIG. 16 and described above. Alternatively, the display can be operated by remote control. In one embodiment, the remote control would communicate with a central control system with information displayed on a single screen such as the screen 250. In another embodiment, each piece of equipment or module can have a small display that will display information to the user. The remote control can operate each module or system separately.

In another alternative, the user interface 250 can be similar to an automated teller machine and include a screen with a nearby series of buttons that set and select items displayed on the user interface. In another alternative, a remote control can be utilized similar to a set up for a television and VCR wherein the remote control is used to manipulate data shown on a screen. The remote control can be utilized to cursor up, down, left and right and also to select, delete or enter information on a screen.

The integrated laundry center 20 of the present invention can also utilize other types of laundry care devices such as a microwave dryer. The microwave would function similar to a conventional microwave and heat the water within the fabric but not the fabric itself. Such a dryer would be extremely gentle to many types of fabrics and yet function to speed up the drying process. Such a microwave dryer can also incorporate an ability to dispense chemicals to enhance fabrics therein similar to those systems described above. For example, color maintenance, wrinkle resistance, fragrance, static elimination, and other chemicals may be used in conjunction with the microwave dryer. The user interface can also be adapted to include controls for the microwave dryer similar to all of the other systems of the integrated laundry center 20.

A number of supplemental drying systems are discussed above including the hanging clothes dryer 50, the stocking or rack dryer 70, the shoe dryer rack 90, and the horizontal drying stack 120. Each of these supplemental drying systems can utilize a supplemental source of circulated air to enhance the drying characteristics of each system. The circulated air is provided separate from the heated air in the tumble dryer 28. The circulated air for the supplemental drying systems can be delivered through a number of duct systems utilizing virtually any air flow pattern. One schematic example is illustrated in FIG. 17.

As shown in FIG. 17, the tumble dryer 28 includes its own air heating components (not shown) wherein the air is vented from the tumble dryer through a duct 300 that can incorporate an optional adjustable baffle 302 that permits air to pass to a vent and exit the integrated laundry center 20. A separate fan 306 is provided that moves air through an optional air heater 308 and then through a series of optional baffles to each of the supplemental drying systems. For example, a duct 309 exiting the heater 308 can direct air to a plurality of baffles including a first baffle 310 that controls flow of air to the hanging clothes dryer 50. In one embodiment, the air that passes through the hanging clothes dryer 50 will then exit through a separate duct 320 and be directed to a baffle 322 that communicates with the same vent 304 that vents the tumble dryer 28. A second baffle 312 that also communicates with the duct 309 controls the flow of air from the supplemental air circulation system to the stocking or rack dryer 70. A separate duct 324 exits the rack dryer and directs air to the baffle 322 and downstream to the vent 304. A third baffle 314 also communicates with the duct 309 for controlling the flow of air to the drawer or horizontal stack dryer 120. Air passing through the stack dryer 120 exits through a separate duct 326 that communicates with the baffle 322 and the vent 304. A further baffle 316 also communicates with the duct 309 and controls the flow of air to the shoe dryers 90. Air passing through the shoe dryers or at least into a discrete space 24 in which the shoe dryers are mounted can be vented through a duct 328 to the baffle 322 and the vent 304.

The construction and arrangement of all of the ducts can vary considerably for each of the discrete spaces 24 for each supplemental drawing system without departing from the spirit and scope of the invention. The air circulation system shown in FIG. 17 illustrates one embodiment of a forced air system.

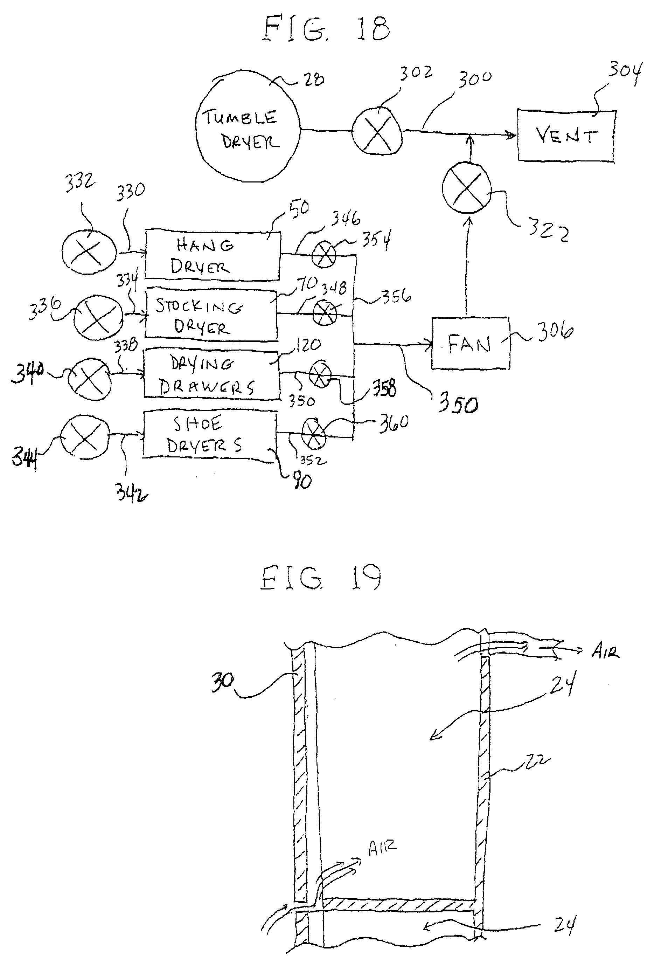

In an alternative embodiment illustrated in FIG. 18, a negative pressure air flow system is utilized for the supplemental air circulation system. Again, the tumble dryer 28 includes its own air and heating system that vents through the vent 304 via the duct 300 and baffle 302. In this embodiment, the hanging clothes dryer 50 includes an air inlet 330 and an optional inlet baffle 332 that controls air flow into the hanging clothes dryer. In this embodiment, the air entering the inlet 330 is ambient air taken from the room in which the laundry center 20 is installed. Similarly, the stocking or rack dryer 70 includes an inlet 334 and an optional inlet baffle 336. The drawers or horizontal dryer 120 includes an air inlet 338 and an optional inlet baffle 340. Similarly, the shoe drying racks 90 include an air inlet 342 and an optional inlet baffle 344. Each of the supplemental drying systems also includes an air outlet duct 346, 348, 350 and 352, respectively that are controlled by optional baffles 354, 356, 358 and 360 in the respective ducts. A fan is connected by a common duct 350 to each of the ducts 346 and directs air from each of the inlets to the outlets toward the baffle 322 that communicates with the vent 304. In this fashion, ambient air is drawn into the respective inlets. However, if an optional baffle at the inlet such as the baffle 332 is included, it can be utilized to block the flow of air into the supplemental hanging clothes dryer. If the baffle 354 at the outlet duct 346 of the same supplemental dryer 50 is incorporated, this baffle can be closed so that no air is drawn through the supplemental dryer. Both baffles of each supplemental dryer are not necessary.

Each of the baffles incorporated into a particular design for the supplemental air flow system can also be electronically controlled by the control system through the user interface 250. The user can therefore directly control air flow through each of the supplemental dryers by selecting a parameter provided on the user interface. By selecting the appropriate parameters, each baffle will be either opened or closed electronically to produce the selected air flow.

The supplemental air flow system shown in either FIG. 18 or FIG. 17 can be modified so that the circulated air travels in series or successively through each of the supplemental drying systems 50, 70, 90 or 120. Such a system would perhaps be available in a lower cost version of the integrated laundry center 20 providing less features and less control to a user of the center. Also, as shown in FIG. 17, a chemical dispenser 307 provides dispensing of appropriate fabric treatment chemistry to selected dryers 50, 70, 90 and 120.

As discussed above, the inlets and outlets of the supplemental air system can take on any number of configurations and constructions and yet fall within the scope of the present invention. Each of the discrete spaces 24 containing a supplemental drying system can include a duct connected to the space as an inlet and a second duct connected to the space as an outlet similar to that illustrated for the shoe dryer 90 in FIG. 6. Alternatively, air ducts can be formed by simple structural arrangement of the panels of a particular integrated space. FIG. 19 illustrates one such example. For a given discrete space 24, a front openable door fascia panel or a front drawer fascia panel can be designed to provide a gap between the panel and the structural elements of the cabinet assembly 22. This gap will allow air to either enter or exit, as needed, the discrete space.

Combined functional relationships of other components and devices of the integrated laundry center 22 are also possible. For example, a motor control module can be adapted to control a washing machine drive system motor, a clothes dryer motor, one or more fan motors for an air circulation system, and a vacuum pump for a vacuum system. The vacuum pump could be used concurrently for the vacuum cleaner and for the ironing board vacuum as described above. Similarly, a steam generator or a water boiler can be utilized to concurrently provide steam for a hand steamer, a steamer discrete space, and steam for an iron as described above. Many other functional relationships of the various components of the laundry center 20 are possible.

In one embodiment, each supplemental drying system 50, 70, 90 and 120 can also be provided, along with the tumble dryer 28, with a dryness sensing system. A sensor can be placed within each dryer or supplemental drying system to sense the dryness of fabric or the humidity within the respective modules. A selectable user interface time parameter or an automatic shut off can be incorporated into the integrated laundry center 20 that will terminate any drying process when the sensor determines that fabric within a particular system is sufficiently dry. Such a dryness sensing system is particularly useful for more sensitive and fragile fabrics that will be dried in the supplemental drying systems.

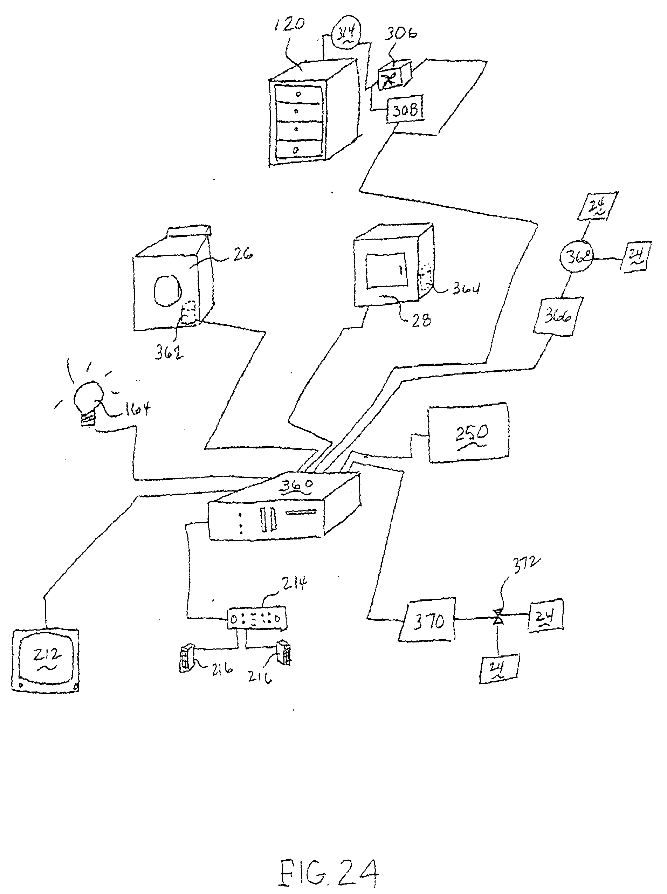

FIG. 24 illustrates a schematic representation of one of many possible control system arrangements for an integrated laundry center 20. A central controller 360, such as a computer processor, includes a user interface 250 for communication between a user and the controller 360. The controller is also electronically coupled to the washer 26, dryer 28 to control a washer motor 362, a dryer motor 364, as well as other operating features of each module. The controller 360 is also electronically coupled to the supplemental drying system fan 306 and optional heater 308 to control the various functions of each. The controller is also coupled to each supplemental drying system baffle, such as, for example, the baffles 310, 312, 314 and 316. The controller 360 is also electronically coupled to a vacuum pump 366 and a baffle 368 to control vacuum pump operation and to which discrete spaces 24 that vacuum is provided. The controller 360 is also electronically coupled to a water boiler 370 and a stream valve 372 to control the boiler and flow of steam. The controller is also coupled to the television 212, stereo 214, and lights 164 to control operation of each. In this manner, a user can control the entire center 20 from the interface 250.

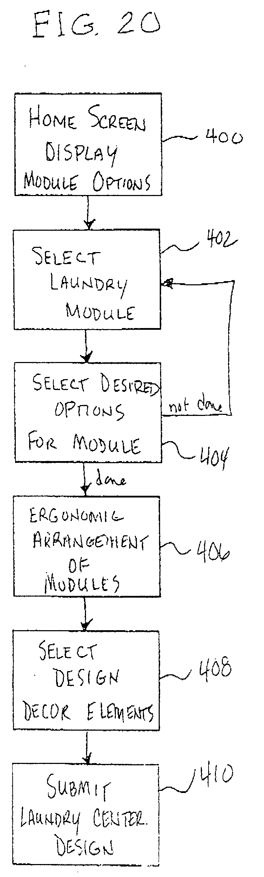

In one embodiment of the invention, a method of designing an integrated laundry center 20 from start to finish is provided. One of many possible embodiments of the method is provided in the flow chart of FIG. 20. The design can be undertaken by either an individual customer over the Internet by consulting a home page of a laundry center provider or the laundry center design can take place at a commercial laundry center provider utilizing bound printed material, a computer screen, a touch screen or the like. A database is provided that includes every available option for an integrated laundry center. The database can either be a printed, hard copy of all design options or an electronic database containing all pertinent design information. A user first must access the database. For example, if the database is an electronic database, an initial screen or home page is provided in one embodiment that displays or introduces the user to all the options for customizing a laundry center design. This initial home page or screen is generally represented by the box 400 of FIG. 20.

The initial screen will display general module and equipment options available to a consumer for designing an integrated laundry center. These options can include the number and type of washing machines, the number and type of dryers, the number and type of supplemental drying systems, and virtually any other laundry care equipment, device, storage cabinet, electronic equipment or the like.

The user selects a particular option from the home page screen such as a washing machine module option. Such selection is indicated at box 402 of FIG. 20. Another screen is provided to the user that provides all the particular options, parameters and characteristics that are available for the washing machine module. The user determines all of their washing machine needs and selects all of the module options as indicated generally at box 404 in FIG. 20. Once completed, the user will either select a next option indicated generally at box 402 and then select all the desired parameters for that particular module or equipment option again as indicated at box 404. When all of the options as desired by the consumer have been selected, another screen is provided to the user for determining the particular ergonomic and structural arrangement of all of the options selected. This particular step is indicated generally at box 406 of FIG. 20. The user can be asked virtually any question about the installation space for the laundry center, such as room dimensions, and also about the particular desired arrangement of the selected options. Other features can also be selected at this time to fill out the entire laundry center and to fit it in a particular space. The screen can provide, if desired, a visual front view, top plan view, three dimensional view or any other view of the room with and without the selected laundry center features.

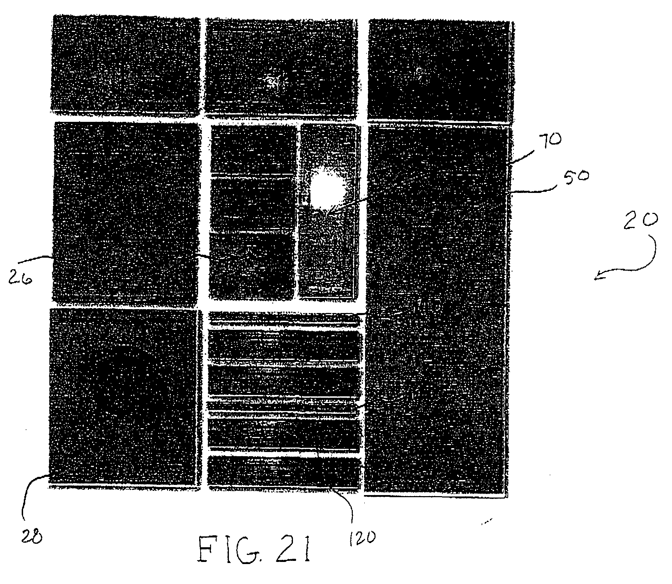

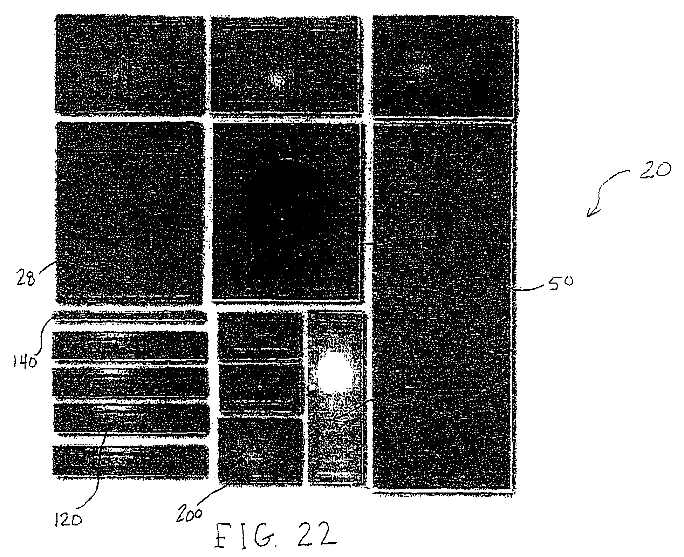

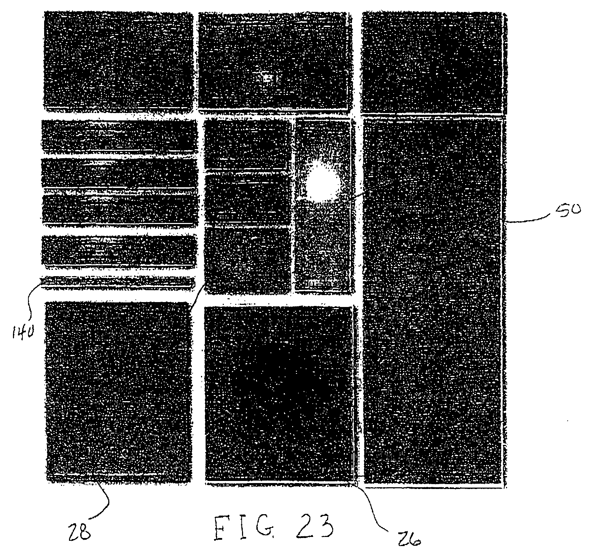

When a user is satisfied that the ergonomic design and arrangement of their selected options is complete, the user moves to the next step as generally indicated at box 408 in FIG. 20. In this step, the user is provided with a number of options for finishing the laundry center including all the selected options arranged as desired. These decor selections can be provided in a pictorial format so that the user can visualize their completed laundry center, or it can be provided in a word descriptive format. Pictorial formats of different laundry center arrangements are illustrated in FIGS. 21-23 as well as FIGS. 1-3. The user can select from many different decor designs in order to provide a pleasing aesthetic integrated laundry center for their home. The decor selections include selecting colors, finish materials, knobs and handles, hinges, door opening directions, and the like. Once a user has selected all the desired aesthetic decor designs, the user then submits their integrated laundry center design for a purchase order or design approval. This submission is indicated generally at box 410 of FIG. 20.

If a consumer is using an Internet design system, the submission at box 410 can be to a laundry center provider whose website database is being accessed. The provider can then professionally review the design and consult with the consumer to make any necessary or suggested changes in the design. If and when the design is approved by the professional, the submission can be placed as an order for purchase of an integrated laundry center. If the laundry center has been designed at a commercial place of business, the submission can simply a purchase order of the designed laundry center since a professional would have consulted with the consumer as the information is entered, resulting in an approved design.

The present invention provides a revolutionary approach to the mundane but necessary tasks of fabric care. The present invention in its many embodiments provides a complete customized integrated laundry center for a home that can be particularly designed to meet the needs of virtually any consumer. A library of laundry equipment and device modules can be accessed to design a specific integrated laundry center that meets all of the needs of the consumer. The customer can create their own laundry center by selecting particular modules and arranging those modules to fit their home. The customer can also select from an array of features for each module so that the laundry center functions as they wish and is aesthetically pleasing to them. The design features and parameters for each particular module option can be selected or discarded by a consumer in order to customize their own integrated laundry center. Basic modules without many features can be provided as an entry level integrated laundry center. A customer can add desired features and parameters to each module and can create a personalized design including virtually all features and incorporating "designer" decor selections.

Each module of the laundry center can be coordinated to match the decor of a particular customer's home. The design can be ergonomically arranged and also arranged in such a manner as to flow with other furniture and spatial relationships within the consumer's home as well. A consumer can select more than one washing machine and/or more than one tumble dryer if their needs require such a high volume capability. A consumer can select from an array of different types of washing machines, dryers and any other laundry care equipment. The washer and dryer selection can include vertical axis washers that incorporate an agitator, an impeller, a nutator or any other such agitation implement. The washers can range from a basic model to a high performance model. Each washer can be an entire washing machine including the metal skin simply surrounded by aesthetically pleasing panels. Alternatively, each washer can be completely integrated component by component into a structural frame of the cabinet assembly 22. The washer can be placed on a slidable support or rack and be hidden within the laundry center when not in use and slid out from the laundry center on its support when intended to be used. By incorporating the washing machine and dryer in such a manner into the structural assembly of the laundry center, a significant reduction in vibration, noise and "walking" of the components can result. Any number of different horizontal tilted, or vertical axis washing machine designs can also be provided as possible selections for a consumer.

Basic models and high performance tumble dryers can also be provided as possible selections. The dryers can either operate via electricity or gas. Additionally, combination washer and dryer units could be selected. This may be a desired option for the consumer because the combined units eliminate the need to remove fabrics from the washer prior to drying, providing more convenience to the consumer.

The integrated laundry center of the invention and all of its possible embodiments provides for functionally interrelated laundry and a fabric care modules that can be arranged and designed according to a consumer's needs. In one embodiment, the entire laundry center can be controlled by an integrated module that communicates electronically with all of the functional modules of the center.

Another desirable aspect of the invention is that the entire modular integrated laundry center can be assembled and disassembled within the home. The center can be reassembled in the same configuration or in a different configuration in a new home of the same consumer. If necessary, a consumer can purchase different modules at different times and integrate them into their laundry center when an update is necessary or desired. The consumer can also remove and replace all of the fascia panels to coordinate with a new decor within their current home or to coordinate with the decor of a new home.

Each of the modules of the integrated laundry center can be configured for easy installation and service. If one module fails, the system and the other modules can be designed to operate independently and properly without the failed module. The user interface can be tied to each module and programmed to sense the condition of each module throughout the system. The control system can be programmed to diagnose impending or actual module failures and to notify a user of such problems. The control system can also be programmed to provide diagnostics to a repair person to help ensure a timely and efficient repair. Further, the control system can be programmed to warn or alert the user to required maintenance, possible problems and preventive maintenance to avoid future problems.

As is apparent from the foregoing specification, the invention is susceptible of being embodied with various alterations and modifications which may differ particularly from those that have been described in the preceding specification and description. It should be understood that we wish to embody within the scope of the patent warranted hereon all such modifications as reasonably and properly come within the scope of our contribution to the art.

## Claims

1. An integrated laundry center comprising:
an integrated cabinet assembly defining a plurality of discrete spaces;
a washing machine at least partly housed within a portion of the cabinet assembly;
a clothes dryer at least partly housed within a portion of the cabinet assembly; and
a plurality of exterior decorative fascia panels carried by the cabinet assembly.

2. The integrated laundry center according to claim 1, wherein the cabinet assembly further comprises:
an integrated frame structure having a plurality of interconnected frame elements; and
a plurality of panels supported by the frame structure to define the plurality of discrete spaces, and wherein at least a portion of the panels comprise the exterior decorative fascia panels.

3. The integrated laundry center according to claim 1, wherein the washing machine is housed in a predetermined washer discrete space, and wherein the clothes dryer is housed in a predetermined dryer discrete space.

4. The integrated laundry center according to claim 3, wherein the washing machine is mounted on a slidable support and is slidable into and out of the washer discrete space.

5. The integrated laundry center according to claim 3, wherein the clothes dryer is mounted on a slidable support and is slidable into and out of the dryer discrete space.

6. The integrated laundry center according to claim 3, wherein the washing machine is securely mounted within the washer discrete space and has a wash basket that is accessible from an exterior of the cabinet assembly.

7. The integrated laundry center according to claim 3, wherein the clothes dryer is securely mounted within the dryer discrete space and has a dryer drum that is accessible from the exterior of the cabinet assembly.

8. The integrated laundry center according to claim 1, wherein the washing machine has a wash basket that rotates about a horizontal axis.

9. The integrated laundry center according to claim 1, wherein the washing machine has a wash basket that rotates about a vertical axis.

10. The integrated laundry center according to claim 1, wherein the decorative fascia panels are removable from the cabinet assembly and are replaceable on the cabinet assembly.

11. The integrated laundry center according to claim 1, wherein the decorative fascia panels are selectable from a variety of different fascia panels.

12. The integrated laundry center according to claim 1, further comprising:
at least one clothes folding surface formed as a part of the cabinet assembly.

13. The integrated laundry center according to claim 1, further comprising:
a slidable shelf that is slidable into and out of a slidable shelf discrete space within the cabinet assembly.

14. The integrated laundry center according to claim 13, further comprising:
at least two of the slidable shelves, wherein one of the shelves is useable as a clothes folding shelf and another of the shelves is disposed near the washing machine and the clothes dryer and is usable as a retractable support surface.

15. The integrated laundry center according to claim 1, further comprising:
at least one supplemental drying discrete space having at least one clothes supporting device therein.

16. The integrated laundry center according to claim 15, wherein the clothes supporting device is a rod that extends across an upper end of the supplemental drying discrete space and is adapted to support a plurality of wet clothes carried on clothes hangers suspended from the rod, and wherein the supplemental drying discrete space is a hanging clothes discrete space large enough to hold hanging clothes such as shirts and pants.

17. The integrated laundry center according to claim 15, further comprising:
an open front side of the supplemental drying discrete space; and
a cover panel that can be opened to providing access into the supplemental drying discrete space and can be closed to cover the open front side, wherein the cover panel is one of the decorative exterior fascia panels.

18. The integrated laundry center according to claim 15, wherein the supplemental drying discrete space further comprises:
an air inlet and an air outlet that each communicate with the supplemental drying discrete space and with an air moving device, and wherein the air inlet and air outlet permit air to circulate through the supplemental drying discrete space.

19. The integrated laundry center according to claim 15, wherein the clothes supporting device is a slidable rack that is slidable into and out of the supplemental drying discrete space and is adapted to support a plurality of wet clothes hanging from the rack.

20. The integrated laundry center according to claim 19, wherein the supplemental drying discrete space is a drying rack discrete space large enough to hold hanging clothes such as socks, underwear and stockings.

21. The integrated laundry center according to claim 15, wherein the clothes supporting device further comprises:
at least two shoe dryers housed in the supplemental drying discrete space, each shoe dryer adapted for supporting a shoe above a bottom surface of the supplemental drying discrete space.

22. The integrated laundry center according to claim 21, wherein each of the shoe dryers further comprises:
a stem supported on the bottom surface of the discrete space;
an upper stem end adapted to be received within and to support a shoe; and
an air flow outlet terminating near the upper stem end and communicating with an air moving device for delivering air into the shoe supported on the shoe dryer.
